(19) Europäisches Patentamt
European Patent Office
Office européen des brevets

(11) Veröffentlichungsnummer: **0 327 497 A2**

(12) **EUROPÄISCHE PATENTANMELDUNG**

(21) Anmeldenummer: **89810057.3**

(22) Anmeldetag: **24.01.89**

(51) Int. Cl.4: **C 08 G 65/40**
C 08 L 71/00, C 08 J 5/24

(30) Priorität: **01.02.88 CH 336/88**

(43) Veröffentlichungstag der Anmeldung:
**09.08.89 Patentblatt 89/32**

(84) Benannte Vertragsstaaten:
**CH DE ES FR GB IT LI NL SE**

(71) Anmelder: **CIBA-GEIGY AG**
**Klybeckstrasse 141**
**CH-4002 Basel (CH)**

(72) Erfinder: **Stockinger, Friedrich**
**Au Fernotz**
**CH-1784 Courtepin (CH)**

**Stauffer, Werner**
**Av. Jean-Marie Musy 6**
**CH-1700 Fribourg (CH)**

Patentansprüche für folgenden Vertragsstaat: ES.

(54) **Härtbare Zusammensetzungen aus Polyethersulfon- oder Polyetherketon-Copolymeren und ungesättigten Imiden.**

(57) Die Erfindung betrifft härtbare Zusammensetzungen enthaltend

a) ein Copolyetherharz mit direkt an Phenylkerne gebundenen Endgruppen -$OR^1$ und 1 bis 50 Mol % an wiederkehrenden Struktureinheiten der Formel I und 99 bis 50 Mol % an wiederkehrenden Struktureinheiten der Formel II,

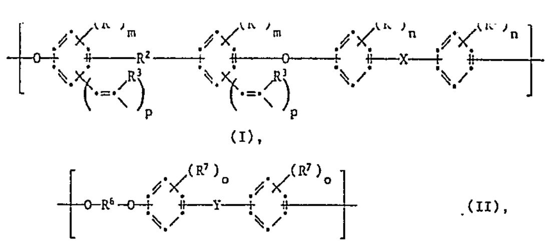

(I), (II),

worin $R^1$ Wasserstoff, eine mit Aminogruppen oder ethylenisch ungesättigten Resten substituierter Phenylenrest oder ein 2,3-Epoxipropylrest ist, $R^2$ eine direkte

EP 0 327 497 A2

C-C-Bindung ist oder eine Gruppe der Formeln $-C_rH_{2r}-$, -O-, -S-, -CO- oder $-SO_2-$ bedeutet, r 1 bis 20 ist, $R^3$ Wasserstoff oder Methyl bedeutet, $R^4$, $R^5$ und $R^7$ inerte Substituenten darstellen, m, n und o unabhängig voneinander 0, 1 oder 2 sind, p 1 oder 2 ist, $R^6$ ein Rest eines Bisphenols ist, X und Y $-SO_2-$ oder -CO- bedeuten,

b) mindestens eine Verbindung der Formeln VIII, IX oder X

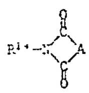 (VIII), 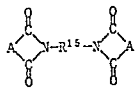 (IX), 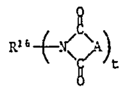 (X),

worin A ein Maleinimidyl, Nadicimidyl, Allylnadicimidyl oder Methallylnadicimidylsystem bildet und $R^{14}$ und $R^{15}$ ein- oder zweiwertige aliphatische cycloaliphatische, aromatische oder heterocyclische Reste sind und $R^{16}$ ein t-wertiger aromatischer Rest ist und t eine ganze Zahl von 3 bis 12 ist. Die Zusammensetzungen lassen sich als Matrixharze zur Herstellung von Faserverbundwerkstoffen einsetzen.

**Beschreibung**

**Härtbare Zusammensetzungen aus Polyethersulfon- oder Polyetherketon-Copolymeren und ungesättigten Imiden**

Die vorliegende Erfindung betrifft neue härtbare Zusammensetzungen sowie die daraus erhältlichen gehärteten Produkte.

Polyetherharze weisen, wie auch andere Thermoplaste, neben den bekannten technischen Vorteilen vor allem die Nachteile auf, dass sie unter Last bei erhöhten Temperaturen ein ausgesprochenes Kriechverhalten zeigen und ferner gegenüber organischen Lösungsmitteln ungenügend beständig sind.

Es hat nicht an Versuchen gefehlt, diese Mängel durch Vernetzung der Polyetherharze zu beheben, indem man Polyetherpolymere mit reaktiven, die Vernetzung bewirkenden Endgruppen, verkappt.

Als solche Endgruppen werden beispielsweise in der EP-A-67,976 die Maleinimidyl-, Nadicimidyl- oder Ethinylgruppen offenbart.

Aus der US-A-4,634,742 sind Polyarylenether bekannt, die im Polymergerüst wenigstens zwei Ethenyl- oder Ethinylgruppen tragen und die noch Endgruppen dieses Typs besitzen.

Es wurde jetzt gefunden, dass sich Gemische aus bestimmten Copolyethersulfonen oder Copolyetherketonen und aus bestimmten ungesättigten Imiden zu gehärteten Produkten verarbeiten lassen, die wünschenswerte Thermoplasteigenschaften, wie hohe Schlagzähigkeit und Biegefestigkeit, und wünschenswerte Duroplasteigenschaften, wie hohe Glasübergangstemperaturen und gute Lösungsmittelbeständigkeit, miteinander vereinen.

Die vorliegende Erfindung betrifft härtbare Zusammensetzungen enthaltend

a) ein Copolyetherharz mit direkt an Phenylkerne gebundenen Endgruppen $-OR^1$ und 1 bis 50 Mol % an wiederkehrenden Struktureinheiten der Formel I und 99 bis 50 Mol % an wiederkehrenden Struktureinheiten der Formel II, wobei die Prozentangaben sich jeweils auf die Gesamtzahl an wiederkehrenden Struktureinheiten pro Molekül beziehen

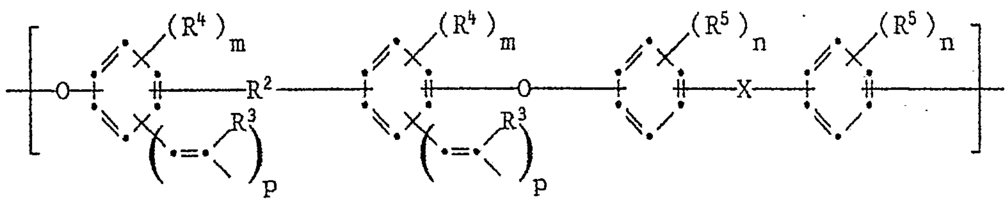

(I),

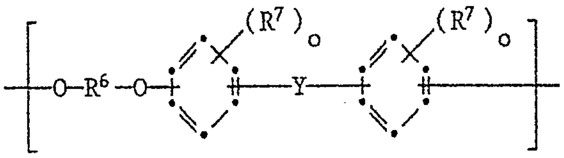

(II),

worin $R^1$ Wasserstoff ist oder einen der Reste der Formeln III bis VI darstellt

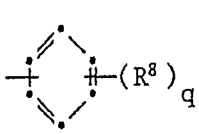 (III), 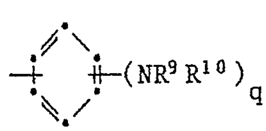 (IV), 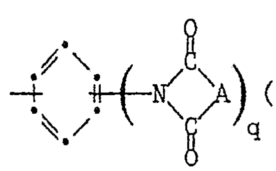 (V),

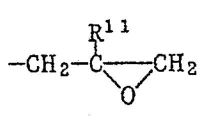 (VI),

$R^2$ eine direkte C-C-Bindung ist oder eine Gruppe der Formeln $-C_rH_{2r}-$, -O-, -S-, -CO- oder $-SO_2-$ bedeutet,

r 1 bis 20 ist,

$R^3$ Wasserstoff oder Methyl bedeutet,

$R^4$, $R^5$ und $R^7$ unabhängig voneinander $C_1$-$C_4$Alkyl, $C_1$-$C_4$Alkoxy oder Chlor oder Brom sind, m, n und o

unabhängig voneinander 0, 1 oder 2 bedeuten, p 1 oder 2 ist,
$R^6$ ein zweiwertiger unsubstituierter oder mit ein oder zwei $C_1$-$C_4$Alkyl-, $C_1$-$C_4$Alkoxygruppen oder Chlor- oder Bromatomen substituierter Rest eines Bisphenols nach dem Entfernen beider phenolischer Hydroxylgruppen ist, X und Y unabhängig voneinander -CO- oder -$SO_2$- bedeuten,
$R^8$ Vinyl, Ethinyl, Allyl, Methallyl, Prop-1-enyl oder 2-Methylprop-1-enyl bedeutet,
$R^9$ und $R^{10}$ unabhängig voneinander Wasserstoff, Allyl oder Methallyl sind,
$R^{11}$ Wasserstoff oder Methyl bedeutet, q 1 oder 2 ist,
A eine Gruppe der Formeln VIIa oder VIIb ist

$-CH{=}CH-$ (VIIa), 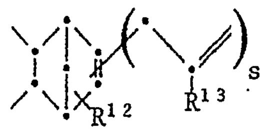 (VIIb),

worin $R^{12}$ und $R^{13}$ unabhängig voneinander Wasserstoff oder Methyl sind und s 0, 1 oder 2 bedeutet, und
b) mindestens eine Verbindung der Formeln VIII, IX oder X

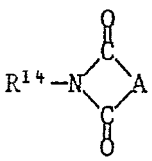 (VIII), 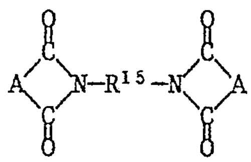 (IX), 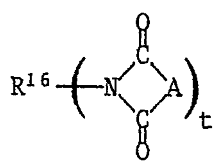 (X),

worin A die oben definierte Bedeutung besitzt, t eine ganze Zahl von 3 bis 12 ist,
$R^{14}$ $C_1$-$C_{20}$Alkyl, $C_5$-$C_{12}$Cycloalkyl, $C_6$-$C_{18}$Aryl, $C_7$-$C_{20}$Aralkyl oder ein $C_4$-$C_{18}$Heterocyclus mit ein oder zwei N-, O- oder S-Atomen ist,
$R^{15}$ $C_2$-$C_{50}$Alkylen, $C_5$-$C_{12}$Cycloalkylen, $C_6$-$C_{18}$Arylen, $C_7$-$C_{20}$Aralkylen oder ein zweiwertiger $C_4$-$C_{18}$heterocyclischer Rest mit ein oder zwei N-, O-oder S-Atomen ist und
$R^{16}$ ein t-wertiger Rest eines aromatischen Polyamins nach dem Entfernen der t Aminogruppen ist.

$R^1$ ist bevorzugt Wasserstoff oder ein Rest der Formel IV, worin $R^9$ und $R^{10}$ jeweils Wasserstoff sind und q 1 bedeutet.

Die Indizes p und q sind vorzugsweise 1 und der Index r ist bevorzugt 1 bis 6, besonders bevorzugt 1.

$R^2$ ist vorzugsweise -$CH_2$-, -$C(CH_3)_2$-, -O- oder -S-.

$R^3$ ist bevorzugt Wasserstoff.

Die Reste -$CH{=}C(R^3)$-$CH_3$ in Formel I befinden sich vorzugsweise jeweils in ortho-Position zum betreffenden phenolischen O-Atom.

$R^4$, $R^5$ und $R^7$ sind als $C_1$-$C_4$Alkyl geradkettig oder verzweigt. Beispiele dafür sind Methyl, Ethyl, n-Propyl, Isopropyl oder n-Butyl. Bevorzugt wird Methyl.

$R^4$, $R^5$ und $R^7$ sind als $C_1$-$C_4$Alkoxy sind geradkettig oder verzweigt. Beispiele dafür sind Methoxy, Ethoxy, n-Propoxy, Isopropoxy oder n-Butoxy. Bevorzugt wird Methoxy.

Die Indizes m, n und o sind vorzugsweise 0.

$R^6$ ist als zweiwertiger Rest eines Bisphenols in der Regel der zweiwertige Rest eines ein- oder mehrkeringen carbocyclisch-aromatischen Phenols, insbesondere der Rest eines ein- oder zweikernigen carbocyclisch-aromatischen Phenols, wobei die beiden aromatischen Kerne kondensiert oder über eine Brückengruppe miteinander verbunden sind.

Bevorzugte Reste $R^6$ entsprechen den Formeln XI bis XIII

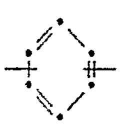 (XI), 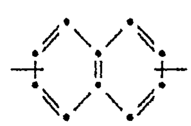 (XII), 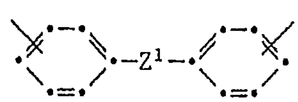 (XIII),

worin $Z^1$ eine direkte C-C-Bindung ist oder eine Gruppe der Formeln -$C_rH_{2r}$- ist, worin r die oben definierte Bedeutung besitzt, -O-, -S-, -$SO_2$-, -CO-, -$C(CF_3)_2$-, -$CH(C_6H_5)$-, -$P(O)R^{17}$- oder eine Gruppe der Formeln XIV oder XV ist

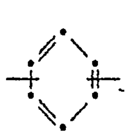 (XIV), 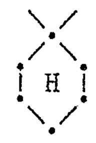 (XV),

und $R^{17}$ Methyl, Cyclohexyl oder Phenyl ist.

Ganz besonders bevorzugte Reste $R^6$ entsprechen den Formeln XI und XIII, worin $Z^1$ eine direkte C-C-Bindung ist oder eine Gruppe der Formeln $-CH_2-$, $-CHCH_3-$, $-C(CH_3)_2-$, $-CH(C_2H_5)-$, $-C(CH_3)(C_2H_5)-$, -O-, -S- oder $-P(O)R^{17}$-ist.

X und Y haben vorzugsweise die gleiche Bedeutung.

$R^8$ ist vorzugsweise Allyl, Methallyl, Prop-1-enyl oder 2-Methylprop-1-enyl, insbesondere Allyl oder Methallyl.

$R^9$ und $R^{10}$ sind bevorzugt Wasserstoff.

$R^{11}$ ist vorzugsweise Wasserstoff.

A ist insbesondere ein Rest der Formel VIIa oder ein Rest der Formel VIIb, worin s 1 bedeutet.

$R^{12}$ und $R^{13}$ sind bevorzugt Wasserstoff und s ist vorzugsweise 1 oder 2, insbesondere 1.

$R^{14}$ ist als $C_1$-$C_{20}$Alkyl geradkettig oder verzweigt. Bevorzugt werden geradkettige Reste. Beispiele für diese Reste $R^{14}$ sind Methyl, Ethyl, n-Propyl, Isopropyl, n-Butyl, sek.Butyl, Pentyl, Hexyl, Heptyl, Octyl, Nonyl, 2-Ethylhexyl, Decyl, Undecyl, Dodecyl, Tetradecyl, Hexadecyl, Octadecyl oder Eicosyl. Bevorzugte Reste $R^{14}$ sind $C_1$-$C_6$Alkyl.

$R^{14}$ ist als $C_5$-$C_{12}$Cycloalkyl beispielsweise Cyclopentyl, Cyclohexyl, Cycloheptyl, Cyclooctyl oder Cyclododecyl; bevorzugt wird Cyclohexyl. $R^{14}$ ist als $C_6$-$C_{18}$Aryl ein ein- bis dreikerniger carbocyclischaromatischer Rest, der gegebenenfalls ein oder mehrere inerte Substituenten, wie Alkyl oder Alkoxy, tragen kann. Mehrkernige Reste können kondensiert sein oder über eine Brückengruppe miteinander verbunden sein. Beispiele für Brückengruppen sind die weiter oben für $Z^1$ definierten Gruppen.

Beispiele für $R^{14}$ als $C_4$-$C_{18}$Heterocyclus mit ein oder zwei N-, S-oder O-Atomen sind fünf- oder sechsgliedrige nichtaromatische oder insbesondere aromatische Gruppen, die vorzugsweise aus ein oder zwei über eine Brückengruppe, wie für $Z^1$ definiert, miteinander verbundenen heterocyclischen Systemen bestehen. Bevorzugt werden fünfgliedrige, einkernige aromatische Gruppen mit einem O- oder S-Atom im Ring, wie Furyl oder Thienyl, oder sechsgliedrige nichtaromatische N-heterocyclische Reste, wie Pyrrolidinyl, Imidazolidinyl, Pyrazolidinyl, Piperidyl, Piperazinyl, Morpholinyl oder Hydantoinidyl.

$R^{14}$ ist bevorzugt Cyclohexyl oder $C_6$-$C_{18}$Aryl. Ganz besonders bevorzugt ist $R^{14}$ ein Rest der Formeln XVII bis XIX

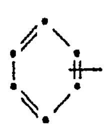 (XVII), 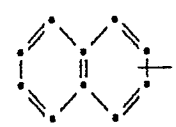 (XVIII), 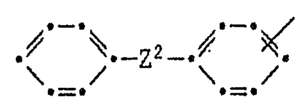 (XIX),

worin $Z^2$ eine der weiter oben für $Z^1$ definierten Bedeutungen besitzt.

Bei $R^{15}$ als $C_2$-$C_{50}$Alkylen handelt es sich in der Regel um geradkettige Alkylenreste.

Beispiele dafür sind Ethylen, Tri-, Tetra-, Penta-, Hexa-, Hepta- Octa-, Nona-, Deca-, Undeca-, Dodeca-, Tetradeca-, Hexadeca-, Octadeca- oder Eicosamethylen. Bevorzugt sind $C_2$-$C_{20}$Alkylenreste.

Bei $R^{15}$ als $C_5$-$C_{12}$Cycloalkylen handelt es sich in der Regel um Cyclopentylen, Cyclohexylen, Cycloheptylen, Cyclooctylen oder Cyclododecylen. Bevorzugt wird Cyclohexylen. Es kann sich aber auch um alkylsubstituierte Cycloalkylenreste handeln oder die Cycloalkylenreste sind Teil einer aliphatischen Kette. Ein Beispiel dafür ist der Rest des Isophorondiamins.

Bei $R^{15}$ als $C_6$-$C_{18}$Arylen handelt es sich in der Regel um ein- bis dreikernige carbocyclisch-aromatische Reste, die gegebenenfalls ein oder mehrere inerte Substituenten, wie Alkyl oder Alkoxy, tragen können. Mehrkernige Reste können kondensiert sein oder über eine Brückengruppe, wie oben für $Z^1$ definiert, miteinander verbunden sein.

Bei $R^{15}$ als zweiwertigem $C_4$-$C_{18}$heterocyclischen Rest mit ein oder zwei N-, S- oder O-Atomen handelt es sich um zweiwertige Gruppen, die sich von den weiter oben für $R^{14}$ beschriebenen Heterocyclen ableiten.

$R^{15}$ ist bevorzugt $C_2$-$C_6$Alkylen oder $C_6$-$C_{18}$Arylen, ganz besonders bevorzugt ist $R^{15}$ ein Rest der Formeln XI bis XIII, wie bereits weiter oben für $R^6$ definiert oder ein Rest der Formel XX

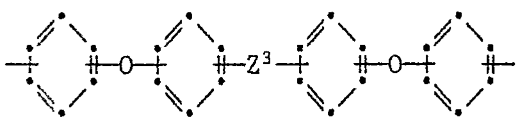

(XX),

worin $Z^3$ die weiter oben für $Z^1$ definierte Bedeutung besitzt. Imidylverbindungen enthaltend diese Reste sind aus der EP-A-32,745 bekannt.

$R^{16}$ ist vorzugsweise ein Rest der Formel XXI

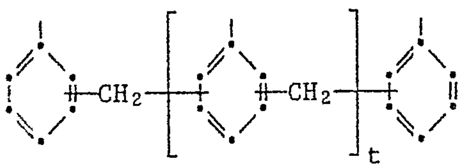

(XXI),

worin t 1 bis 10 bedeutet.

Bevorzugt werden härtbare Zusammensetzungen, worin m, n und o 0 sind und p und q 1 bedeuten.

Ebenfalls bevorzugt werden härtbare Zusammensetzungen, worin $R^{12}$ und $R^{13}$ Wasserstoff sind und s 1 bedeutet.

Ferner werden härtbare Zusammensetzungen bevorzugt, worin X und Y jeweils die gleiche Bedeutung besitzen.

Bevorzugt werden härtbare Zusammensetzungen, worin $R^1$ Wasserstoff ist oder eine Gruppe der Formeln III bis V bedeutet.

Von diesen letzteren Zusammensetzungen wird besonders diejenige Ausführungsform bevorzugt, worin $R^1$ Wasserstoff oder eine Gruppe der Formel IV ist, q 1 bedeutet und $R^9$ und $R^{10}$ Wasserstoff bedeuten.

Ganz besonders bevorzugt werden härtbare Zusammensetzungen, worin Komponente a) aus 2 bis 30 Mol %, insbesondere 5 bis 20 Mol %, an wiederkehrenden Struktureinheiten der Formel I und aus 98 bis 70 Mol %, vorzugsweise 95 bis 80 Mol %, an wiederkehrenden Struktureinheiten der Formel II besteht und ein mittleres Molekulargewicht (Zahlenmittel) von 2000 bis 30000, vorzugsweise von 5000 bis 20000, aufweist.

Ganz besonders bevorzugt werden härtbare Zusammensetzungen, worin Komponente b) eine Verbindung der Formel VIII oder der Formel IX oder ein Gemisch solcher Verbindungen ist, $R^{14}$ $C_5$-$C_7$Cycloalkyl oder $C_6$-$C_{18}$Aryl ist und $R^{15}$ $C_6$-$C_{18}$Arylen ist.

Von dieser letzteren Ausführungsform werden insbesondere härtbare Zuammensetzungen bevorzugt, worin $R^{14}$ Cyclohexyl oder Phenyl und $R^{15}$ ein Rest der oben definierten Formel XIII ist, worin $Z^1$ eine direkte C-C-Bindung, $-CH_2-$, $-C(CH_3)_2-$, $-C(CF)_2-$, -O-, -S-, $-SO_2-$ oder -CO-ist.

Die Polymeren der Komponente a) mit Hydroxylendgruppen können erhalten werden, indem man Verbindungen der Formeln XXII und/oder XXIII und der Formeln XXIV bis XXVI in einem polaren, aprotischen Lösungsmittel in Gegenwart einer Base umsetzt

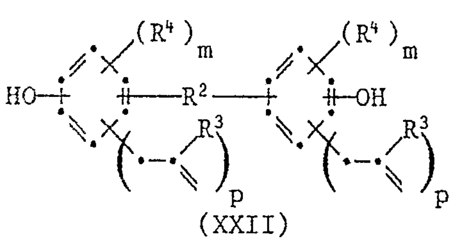

(XXII)

,

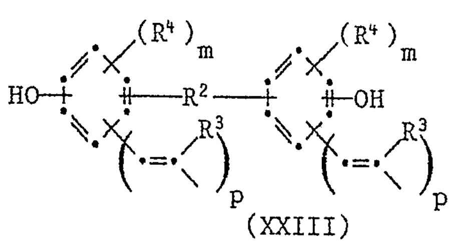

(XXIII)

,

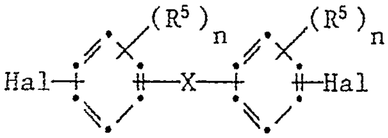

(XXIV)

, $HO-R^6-OH$ (XXV) ,

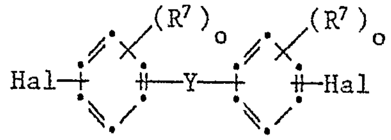

(XXVI)

;

dabei haben die Reste $R^2$ bis $R^7$, X und Y, sowie die Indizes m, n, o und p die weiter oben definierte Bedeutung und Hal ist ein Fluor-, Chlor-, Brom- oder Iodatom, bevorzugt ein Chloratom bei den Sulfonen und ein

Fluoratom bei den Ketonen.

Setzt man eine Verbindung der Formel XXII ein, so erfolgt während der Reaktion eine Isomerisierung zum entsprechenden 1-Propenylderivat. Zur Herstellung der hydroxyl-terminierten Copolyetherharze ($R^1$ = Wasserstoff) sind die Mengenverhältnisse der Bisphenol- zu den Dihalogenverbindungen dabei in an sich bekannter Weise zu wählen, so dass ein geringer stöchiometrischer Ueberschuss an Bisphenolkomponenten vorliegt. Das molare Verhältnis der Verbindungen XXII/XXIV bzw. XXIII/XXIV zu den Verbindungen XXV/XXVI beträgt im allgemeinen 1:99 bis 1:1.

Man kann allerdings auch die Dihalogenverbindungen in geringem stöchiometrischen Ueberschuss vorlegen und die erhaltenen halogen-terminierten Copolyetherharze anschliessend durch Umsetzung mit einem Alkalimetallhydroxid, wie Natronlauge modifizieren.

Als Lösungsmittel setzt man im allgemeinen polare, aprotische Verbindungen ein, beispielsweise Dimethylformamid oder Dimethylacetamid.

Als Basen eignen sich insbesondere anorganische Basen, wie NaOH, KOH oder $K_2CO_3$.

Die Umsetzung der Bisphenole mit den aromatischen Dihalogenverbindungen zu Polyarylenethern ist an sich bekannt und beispielsweise in der EP-A 106,023 beschrieben.

Wünscht man endgruppenverkappte Komponenten a) ($R^1 \neq$ Wasserstoff), so lassen sich diese vorteilhafterweise in einer Eintopfreaktion herstellen. Dies ist beispielsweise in der oben erwähnten EP-A-67,976 beschrieben.

Dazu legt man die entsprechenden Dihalogenverbindungen der Formeln XXIV und XXVI in geringem stöchiometrischen Ueberschuss zusammen mit den Bisphenolen der Formeln XXII und/oder XXIII und XXV vor und setzt diese gleichzeitig mit Monophenolen der Formeln XXVII bis XXIX um, so dass die entstehenden dihalogen-terminierten Polymeren mit besagten Monophenolen verkappt werden können

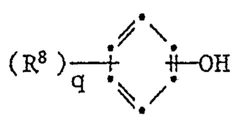 ,
(XXVII)

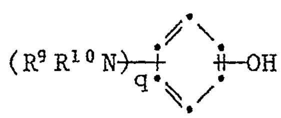 ,
(XXVIII)

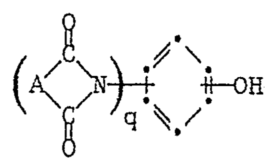 ;
(XXIX)

dabei besitzen die Reste $R^8$ bis $R^{10}$ und A sowie der Index q die weiter oben definierte Bedeutung.

Glycidyl-terminierte Polymerkomponenten a) erhält man in an sich bekannter Weise durch Umsetzung der entsprechenden hydroxyl-terminierten Polymeren mit Epichlorhydrin oder mit β-Methylepichlorhydrin in Gegenwart von Basen.

Die Zwischenprodukte der Formeln XXII bis XXVI sind an sich bekannt oder können nach an sich bekannten Verfahren erhalten werden.

So lassen sich die 1-Propenylderivate der Formel XXIII aus den entsprechenden (Meth)allylderivaten der Formel XXII durch alkalische Isomerisation herstellen. Beispiele für solche Reaktionen findet man in der EP-A-14,816.

Die (Meth)allylderivate der Formel XXII lassen sich aus den entsprechenden (Meth)allylethern der Bisphenole durch Claisen Umlagerung erhalten. Beispiele für solche Reaktionen findet man ebenfalls in der EP-A-14,816.

Die Bisphenole der Formel XXV und die Dihalogenverbindungen der Formeln XXIV und XXVI sind teilweise im Handel erhältlich. Diese Verbindungen sind als Aufbaukomponenten für polyarylenether bereits bekannt und beispielsweise in der EP-A-106,023 beschrieben.

Die funktionalisierten Monophenole der Formeln XXVII bis XXIX sind ebenfalls an sich bekannt.

Die Verbindungen der Formel XXVIII, worin $R^9$ und/oder $R^{10}$ Allyl oder Methallyl bedeuten, können beispielsweise durch Umsetzung von Allyl-oder Methallylchlorid mit den entsprechenden Aminophenolen erhalten werden. Die Herstellung von Verbindungen des Typs der Formel XXIX wird beispielsweise in der EP-A-67,976 beschrieben.

Die Verbindungen der Formeln XVIII bis X sind ebenfalls an sich bekannt und teilweise im Handel erhältlich.

Die Herstellung der Maleinimidylverbindungen der Formeln XVIII bis X kann beispielsweise in Analogie zu den in der US-A-3,522,271 beschriebenen Methoden erfolgen.

Maleinimidylverbindungen der Formel X sind beispielsweise in der DE-A-2,230,874 beschrieben.

Die entsprechenden Bicyclo[2.2.1)hept-5-en-2,3-dicarbonsäureimidderivate oder die allyl- oder methallylsubstituierten Derivate dieses Typs können in Analogie zu den Maleinimidylverbindungen erhalten werden, indem man anstelle von Maleinsäureanhydrid die entsprechenden Bicyclo[2.2.1]hept-5-en-2,3-dicarbonsäureanhydride einsetzt.

Verbindungen dieses Typs sind beispielsweise aus der US-A-4,515,962 bekannt.

Ein besonderer Vorteil der erfindungsgemässen härtbaren Zusammensetzungen ist darin zu sehen, dass diese in der für Thermoplasten üblichen Weise eingesetzt und verarbeitet werden können und nach der Härtung die für Duroplaste charakteristischen Eigenschaften, wie hohe Festigkeit und Glasübergangstemperaturen, aufweisen.

Die härtbaren Zusammensetzungen weisen im allgemeinen 1-99 Gew.-%, vorzugsweise 60-95 Gew.%, an Komponente a) und 99-1 Gew.%, vorzugsweise 40-5 Gew.%, an Komponente b) auf, wobei die Prozentangaben sich auf die Menge an Komponenten a) und b) beziehen.

Die härtbaren Zusammensetzungen können beispielsweise als Press-, Ueberzugs- oder Beschichtungsmassen oder zur Herstellung von Filmen Verwendung finden. Vor dem Applizieren können den als Presspulver, Schmelzen oder Lösungen in einem üblichen organischen Lösungsmittel vorliegenden Polyetherharzen die üblichen Zusatzstoffe, wie beispielsweise Füllstoffe, Pigmente, Stabilisatoren oder Verstärkungsmittel, wie Kohlenstoff-, Bor-oder Glasfasern, zugegeben werden. Die härtbaren Gemische können auch zusammen mit anderen Thermoplasten, wie beispielsweise Polyestern, Polyamiden, Polyimiden, Polyolefinen oder Polyurethanen, insbesondere mit den konventionellen Polyetherharzen, ver arbeitet werden.

Vorzugsweise eignen sich die härtbaren Zusammensetzungen als Matrixharze für die Herstellung von Faserverbundsystemen, wobei man als Vestärkungsfasern die üblichen bei der Faserverstärkung von Werkstoffen verwendeten Fasern einsetzen kann. Diese können organische oder anorganische Fasern, Naturfasern oder Synthesefasern, wie Aramid-Fasern, sein und als Faserbündel oder Endlosfasern vorliegen. Beispielsweise verwendet man als Verstärkungsfasern Glas-, Asbest-, Bor-, Kohlenstoff- und Metallfasern, vorzugweise Kohlenstoff- und Metallfasern. Solche Fasern und Gewebe daraus sind im Handel erhältlich.

Die Erfindung betrifft also auch die Verwendung der härtbaren Zusammensetzungen als Matrixharze für die Herstellung von Faserverbundwerkstoffen.

Ein weiterer Gegenstand vorliegender Erfindung sind auch die durch Erhitzen oder Bestrahlung mit aktinischer Strahlung der erfindungsgemässen härtbaren Zusammensetzungen erhältlichen vernetzten Produkte.

Wie eingangs erwähnt, können die härtbaren Zusammensetzungen zu Produkten mit vorteilhaften Eigenschaften vernetzt werden. Im Falle einer thermischen Vernetzung kann diese in Gegenwart von Sauerstoff oder, nach vorheriger Oxidation mittels Sauerstoffbehandlung, auch unter anaeroben Bedingungen, z.B. in der Laminierpresse, erfolgen.

Die Temperaturen bei der thermischen Vernetzung betragen im allgemeinen 220-350°C, vorzugsweise 250-300°C.

Die thermische Vernetzung kann gegebenenfalls in Gegenwart von Radikalbildnern, z.B. anorganischen oder organischen Peroxiden, wie Kaliumperoxidsulfat oder Benzoylperoxid, Azoverbindungen, wie Azoisobutyronitril, organischen Hydroperoxiden, wie Cumolhydroperoxid oder tert.-Butylhydroperoxid, $\alpha$-Halogenacetophenon, Bezoin oder dessen Ethern, Benzophenon, Benzpinakol, Benzilacetalen, Anthrachinonen, Arsinen, Phosphinen, Thoharnstoffen, Redox-Initiatorsystemen, anaerobischen Initiatorsystemen oder Metallsalzen vorgenommen werden.

Die Menge an Radikalbildner beträgt im allgemeinen 0,1-5 Gew.%, vorzugsweise 0,5-3 Gew.%, bezogen auf Komponenten a) und b).

Im Falle einer Vernetzung der erfindungsgemässen härtbaren Zusammensetzungen mittels aktinischer Strahlung kann diese zum Beispiel mit Röntgenstrahlen, beschleunigten Elektronen, von einer $^{60}$Co-Quelle ausgesandten $\gamma$-Strahlen oder mit UV-Strahlen vorgenommen werden.

Die folgenden Beispiele erläutern die Erfindung.

A) Herstellung der Polymerkomponente

Beispiel A1):

In einem 6 Liter Sulfierkolben, ausgerüstet mit Flügelrührer, Thermometer, Wasserabscheider, Intensivkühler und Gaseinleitungsrohr, werden 439,9 g (1,532 Mol) 4,4'-Dichlordiphenylsulfon, 297,2 g (1,302 Mol) 2,2-Bis-(4-hydroxyphenyl)-propan, 94,4 g (0,306 Mol) 2,2-Bis-(3-allyl-4-hydroxyphenyl)-propan, 254,3 g (1,84 Mol) wasserfreies, pulverisiertes Kaliumcarbonat, 2,5 $\ell$ Dimethylacetamid und 1 $\ell$ Xylol 2 Stunden lang bei 146°C zur Reaktion gebracht und das entstehende Reaktionswasser laufend azeotrop ausgekreist. Anschliessend wird solange Lösungsmittel abdestilliert bis die Innentemperatur 150°C erreicht hat. Dann lässt man 20 Stunden lang bei dieser Temperatur weiter reagieren und destilliert anschliessend nochmals Lösungsmittel ab, bis die Innentemperatur auf 157°C angestiegen ist. Nach weiteren 65 Minuten Reaktionsdauer werden 2 $\ell$ Dimethylacetamid zugegeben, das Reaktionsgemisch auf Raumtemperatur abgekühlt und dann in 15 $\ell$ Wasser unter intensivem Rühren mit einem Turbomischer ausgefällt. Der Niederschlag wird abgesaugt, mit Wasser gut gewaschen und im Vakuum bei 100°C getrocknet. Man erhält 713,8 g (99,1 % d. Theorie) eines farblosen Pulvers, das in Methylenchlorid klar löslich ist.

Analytische Daten:

Gelchromatographie: $M_n = 6954$; $M_w = 30082$; $M_w/M_n = 4,32$.

Glasumwandlungstemperatur ($T_g$ onset, TMA): 115°C.

| Elementaranalyse: | berechnet | gefunden |
|---|---|---|
| | 6,82 % S | 6,79 % S. |

Beispiel A2):

Analog Beispiel A1) werden 458,38 g (1,596 Mol) 4,4'-Dichlordiphenylsulfon, 260,22 g (1,14 Mol) 2,2-Bis-(4-hydroxyphenyl)-propan, 164,42 g (0,532 Mol) 2,2-Bis-(3-allyl-4-hydroxyphenyl)-propan, 254,0 g (1,84 Mol) wasserfreies, pulverisiertes Kaliumcarbonat, 2,5 ℓ Dimethylacetamid und 1 ℓ Xylol zur Reaktion gebracht und wie in Beispiel A1) beschrieben aufgearbeitet. Es werden 750,2 g (97,9 % der Theorie) eines farblosen Polysulfons erhalten und das in Methylenchlorid klar löslich ist.

Analytische Daten:
Gelchromatographie: $M_n = 7395$; $M_w = 36393$; $M_w / M_n = 4{,}92$.
Glasumwandlungstemperatur ($T_g$ onset, TMA): 107° C.

| Elementaranalyse: | berechnet | gefunden |
|---|---|---|
| | 6,5 % S | 6,68 % S. |

B) Anwendungsbeispiele

Beispiel B1):
100 g Polysulfon (hergestellt nach Beispiel A1) und 15 g Bis-(4-maleinimidylphenyl)-methan werden mit einer automatischen Reibschale der Marke Pulverisette während 10 Minuten homogenisiert. Etwa 10 g dieses Pulvers werden auf ein eloxiertes Aluminiumblech gegeben und bei 200°C während 2 Minuten in der Laborpresse zu einem 0,5 mm dünnen Plättchen verpresst. Anschliessend wird je ein Viertel dieses Plättchens während 6 h bei 250° C, 6 h bei 280° C und 6 h bei 310° C polymerisiert. Die Eigenschaften des Polymeren findet man in Tabelle 1.

Beispiel B2):
100 g Polysulfon (hergestellt nach Beispiel A2) und 25 g Bis-(4-maleinimidylphenyl)-methan werden, wie in Anwendungsbeispiel B1 beschrieben, verarbeitet und polymerisiert. Die Eigenschaften des Polymeren findet man in Tabelle 1.

Tabelle 1

Von den Polymeren werden die Glasumwandlungstemperaturen durch thermomechanische Analyse (TMA) mit einem TA-3000-Gerät der Firma Mettler ermittelt und die Lösungsmittelbeständigkeit in Methylenchlorid bestimmt.

| Beispiel Nr. | Härtung / Test | 2 Min. 200°C | 6h 250°C | 6h 280°C | 6h 310°C |
|---|---|---|---|---|---|
| B1) | $T_g$[1] onset [TMA, °C] | 115 | 182 | 189 | 192 |
| | $T_g$[1] [TMA, °C] | 124 | 187 | 194 | 202 |
| | Aspekt | gelblich | rötlich | rotbraun | dunkel |
| | Beständigkeit in Methylenchlorid nach 10 Tagen | aufgelöst | gequollen | unlöslich | unlöslich |
| B2) | $T_g$[1] onset [TMA, °C] | 107 | 197 | 194 | 202 |
| | $T_g$[1] [TMA, °C] | 114 | 212 | 208[1] | 215[1] |
| | Aspekt | gelblich | rötlich | rotbraun | dunkel |
| | Beständigkeit in Methylenchlorid nach 10 Tagen | aufgelöst | leicht gequollen | unlöslich | unlöslich |

1) $T_g$-Bestimmung mittels TMA: Aufzeichnung der Eindringtiefe eines Messfühlers als Funktion der Probentemperatur.

$T_g$-Wert = Minimum der 1. Ableitung des Kurvenverlaufs.

$T_g$-onset-Wert = Schnittpunkt der verlängerten Basislinie mit der Tangente an die Messkurve im Bereich des steilsten Anstiegs.

**Patentansprüche**

1. Härtbare Zusammensetzungen enthaltend a) ein Copolyetherharz mit direkt an Phenylkerne gebundenen Endgruppen $-OR^1$ und 1 bis 50 Mol % an wiederkehrenden Struktureinheiten der Formel I und 99 bis 50 Mol % an wiederkehrenden Struktureinheiten der Formel II, wobei die Prozentangaben sich jeweils auf die Gesamtzahl an wiederkehrenden Struktureinheiten pro Molekül beziehen

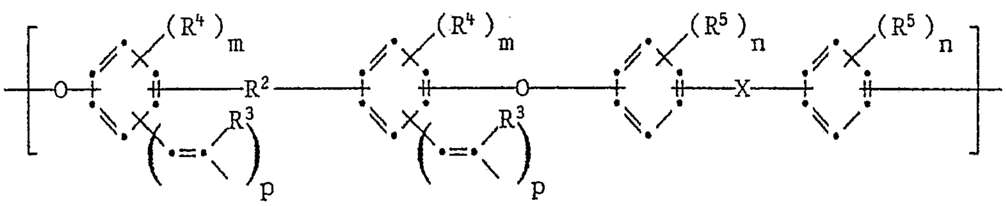

(I),

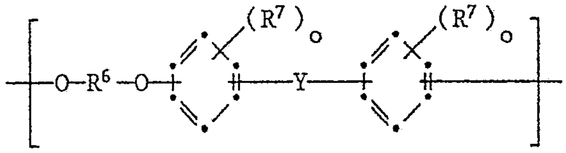

(II),

worin $R^1$ Wasserstoff ist oder einen der Reste der Formeln III bis VI darstellt

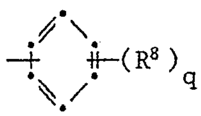 (III), 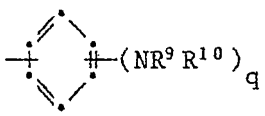 (IV), 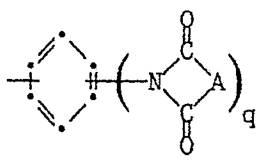 (V),

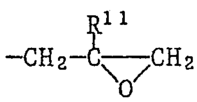 (VI),

$R^2$ eine direkte C-C-Bindung ist oder eine Gruppe der Formeln $-C_rH_{2r}-$, -O-, -S-, -CO- oder $-SO_2-$ bedeutet,
r 1 bis 20 ist,
$R^3$ Wasserstoff oder Methyl bedeutet,
$R^4$, $R^5$ und $R^7$ unabhängig voneinander $C_1$-$C_4$Alkyl, $C_1$-$C_4$Alkoxy oder Chlor oder Brom sind, m, n und o unabhängig voneinander 0, 1 oder 2 bedeuten, p 1 oder 2 ist,
$R^6$ ein zweiwertiger unsubstituierter oder mit ein oder zwei $C_1$-$C_4$Alkyl-, $C_1$-$C_4$Alkoxygruppen oder Chlor- oder Bromatomen substituierter Rest eines Bisphenols nach dem Entfernen beider phenolischer Hydroxylgruppen ist,
X und Y unabhängig voneinander -CO- oder $-SO_2-$ bedeuten,
$R^8$ Vinyl, Ethinyl, Allyl, Methallyl, Prop-1-enyl oder 2-Methylprop-1-enyl bedeutet,
$R^9$ und $R^{10}$ unabhängig voneinander Wasserstoff, Allyl oder Methallyl sind,
$R^{11}$ Wasserstoff oder Methyl bedeutet, q 1 oder 2 ist,
A eine Gruppe der Formeln VIIa oder VIIb ist

$-CH=CH-$ (VIIa), 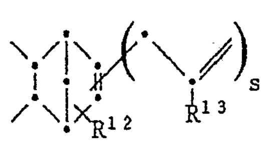 (VIIb),

worin $R^{12}$ und $R^{13}$ unabhängig voneinander Wasserstoff oder Methyl sind und s 0, 1 oder 2 bedeutet, und
b) mindestens eine Verbindung der Formeln VIII, IX oder X

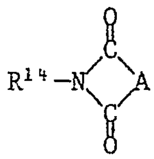 (VIII), 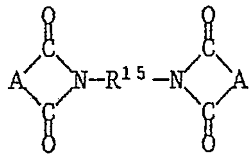 (IX), 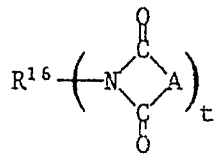 (X),

worin A die oben definierte Bedeutung besitzt, t eine ganze Zahl von 3 bis 12 ist,
$R^{14}$ $C_1$-$C_{20}$Alkyl, $C_5$-$C_{12}$Cycloalkyl, $C_6$-$C_{18}$Aryl, $C_7$-$C_{20}$Aralkyl oder ein $C_4$-$C_{18}$Heterocyclus mit ein oder zwei N-, O- oder S-Atomen ist,
$R^{15}$ $C_2$-$C_{50}$Alkylen, $C_5$-$C_{12}$Cycloalkylen, $C_6$-$C_{18}$Arylen, $C_7$-$C_{20}$Aralkylen oder ein zweiwertiger $C_4$-$C_{18}$heterocyclischer Rest mit ein oder zwei N-, O-oder S-Atomen ist und
$R^{16}$ ein t-wertiger Rest eines aromatischen Polyamins nach dem Entfernen der t Aminogruppen ist.

2. Härtbare Zusammensetzungen gemäss Anspruch 1, worin m, n und o 0 sind und p und q 1 bedeuten.

3. Härtbare Zusammensetzungen gemäss Anspruch 1, worin $R^{12}$ und $R^{13}$ Wasserstoff sind und s 1 bedeutet.

4. Härtbare Zusammensetzungen gemäss Anspruch 1, worin X und Y jeweils die gleiche Bedeutung besitzen.

5. Härtbare Zusammensetzungen gemäss Anspruch 1, worin $R^1$ Wasserstoff ist oder eine Gruppe der Formeln III bis V bedeutet.

6. Härtbare Zusammensetzungen gemäss Anspruch 5, worin $R^1$ Wasserstoff oder eine Gruppe der Formel IV ist, q 1 bedeutet und $R^9$ und $R^{10}$ Wasserstoff bedeuten.

7. Härtbare Zusammensetzungen gemäss Anspruch 1, worin Komponente a) aus 2 bis 30 Mol % an wiederkehrenden Struktureinheiten der Formel I und aus 98 bis 70 Mol % an wiederkehrenden Struktureinheiten der Formel II besteht und ein mittleres Molekulargewicht (Zahlenmittel) von 2000 bis 30000 aufweist.

8. Härtbare Zusammensetzungen gemäss Anspruch 1, worin Komponente b) eine Verbindung der Formel VIII oder der Formel IX oder ein Gemisch solcher Verbindungen ist, $R^{14}$ $C_5$-$C_7$Cycloalkyl oder C6-$C_{18}$Aryl ist und $R^{15}$ $C_6$-$C_{18}$Arylen ist.

9. Härtbare Zusammensetzungen gemäss Anspruch 8, worin $R^{14}$ Cyclohexyl oder Phenyl ist und $R^{15}$ ein Rest der Formel XIII ist

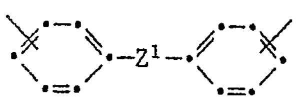 (XIII)

worin $Z^1$ eine direkte C-C-Bindung, $-CH_2-$, $-C(CH_3)_2-$, $-C(CF_3)_2-$, -O-, -S-, $-SO_2-$ oder -CO- ist.

10. Die durch Erhitzen oder Bestrahlung mit aktinischer Strahlung der Zusammensetzungen gemäss Anspruch 1 erhältlichen vernetzten Produkte.

11. Verwendung der härtbaren Zusammensetzungen gemäss Anspruch 1 als Matrixharze für die Herstellung von Faserverbundwerkstoffen.

**Patentansprüche für folgenden Vertragsstaat: ES**

1. Härtbare Zusammensetzungen enthaltend a) ein Copolyetherharz mit direkt an Phenylkerne gebundenen Endgruppen $-OR^1$ und 1 bis 50 Mol % an wiederkehrenden Struktureinheiten der Formel I und 99 bis 50 Mol % an wiederkehrenden Struktureinheiten der Formel II, wobei die Prozentangaben sich jeweils auf die Gesamtzahl an wiederkehrenden Struktureinheiten pro Molekül beziehen

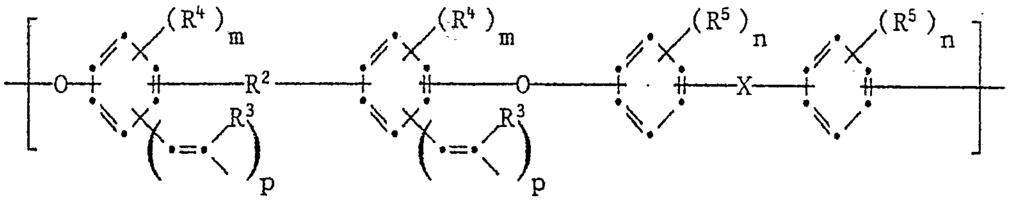

(I),

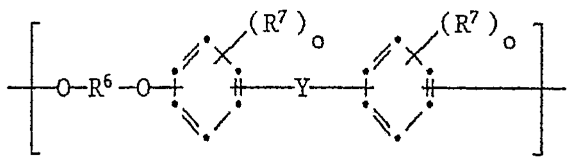

(II),

worin $R^1$ Wasserstoff ist oder einen der Reste der Formeln III bis VI darstellt

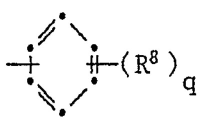 (III), 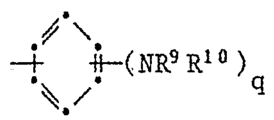 (IV), 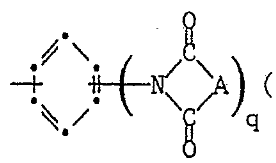 (V),

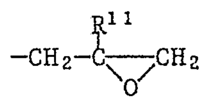 (VI),

$R^2$ eine direkte C-C-Bindung ist oder eine Gruppe der Formeln $-C_rH_{2r}-$, -O-, -S-, -CO- oder $-SO_2-$ bedeutet,
r 1 bis 20 ist,
$R^3$ Wasserstoff oder Methyl bedeutet,
$R^4$, $R^5$ und $R^7$ unabhängig voneinander $C_1$-$C_4$Alkyl, $C_1$-$C_4$Alkoxy oder Chlor oder Brom sind, m, n und o unabhängig voneinander 0, 1 oder 2 bedeuten, p 1 oder 2 ist,
$R^6$ ein zweiwertiger unsubstituierter oder mit ein oder zwei $C_1$-$C_4$Alkyl-, $C_1$-$C_4$Alkoxygruppen oder Chlor- oder Bromatomen substituierter Rest eines Bisphenols nach dem Entfernen beider phenolischer Hydroxylgruppen ist,
X und Y unabhängig voneinander -CO- oder $-SO_2-$ bedeuten,
$R^8$ Vinyl, Ethinyl, Allyl, Methallyl, Prop-1-enyl oder 2-Methylprop-1-enyl bedeutet,
$R^9$ und $R^{10}$ unabhängig voneinander Wasserstoff, Allyl oder Methallyl sind,
$R^{11}$ Wasserstoff oder Methyl bedeutet, q 1 oder 2 ist,
A eine Gruppe der Formeln VIIa oder VIIb ist

$-CH=CH-$ (VIIa), 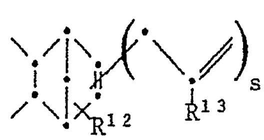 (VIIb),

worin $R^{12}$ und $R^{13}$ unabhängig voneinander Wasserstoff oder Methyl sind und s 0, 1 oder 2 bedeutet, und
b) mindestens eine Verbindung der Formeln VIII, IX oder X

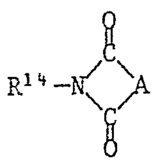 (VIII), 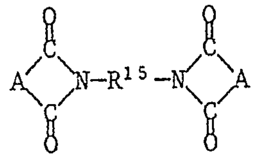 (IX), 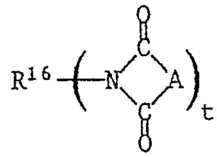 (X),

worin A die oben definierte Bedeutung besitzt, t eine ganze Zahl von 3 bis 12 ist,
$R^{14}$ $C_1$-$C_{20}$Alkyl, $C_5$-$C_{12}$Cycloalkyl, $C_6$-$C_{18}$Aryl, $C_7$-$C_{20}$Aralkyl oder ein $C_4$-$C_{18}$Heterocyclus mit ein oder zwei N-, O- oder S-Atomen ist,
$R^{15}$ $C_2$-$C_{50}$Alkylen, $C_5$-$C_{12}$Cycloalkylen, $C_6$-$C_{18}$Arylen, $C_7$-$C_{20}$Aralkylen oder ein zweiwertiger $C_4$-$C_{18}$heterocyclischer Rest mit ein oder zwei N-, O-oder S-Atomen ist und
$R^{16}$ ein t-wertiger Rest eines aromatischen Polyamins nach dem Entfernen der t Aminogruppen ist.

2. Härtbare zur Herstellung gehärteter Produkte, dadurch gekennzeichnet, dass man Zusammensetzungen gemäss Anspruch 1 durch Erhitzen oder durch Bestrahlung mit aktinischer Strahlung härtet.

3. Härtbare Zusammensetzungen gemäss Anspruch 1 oder Verfahren gemäss Anspruch 2, worin m, n und o 0 sind und p und q 1 bedeuten.

4. Härtbare Zusammensetzungen gemäss Anspruch 1 oder Verfahren gemäss Anspruch 2, worin X und Y jeweils die gleiche Bedeutung besitzen.

5. Härtbare Zusammensetzungen gemäss Anspruch 1 oder Verfahren gemäss Anspruch 2, worin $R^1$ Wasserstoff ist oder eine Gruppe der Formeln III bis V bedeutet.

6. Härtbare Zusammensetzungen oder Verfahren gemäss Anspruch 5, worin $R^1$ Wasserstoff oder eine Gruppe der Formel IV ist, q 1 bedeutet und $R^9$ und $R^{10}$ Wasserstoff bedeuten.

7. Härtbare Zusammensetzungen gemäss Anspruch 1 oder Verfahren gemäss Anspruch 2, worin Komponente a) aus 2 bis 30 Mol % an wiederkehrenden Struktureinheiten der Formel I und aus 98 bis 70 Mol % an wiederkehrenden Struktureinheiten der Formel II besteht und ein mittleres Molekulargewicht (Zahlenmittel) von 2000 bis 30000 aufweist.

8. Härtbare Zusammensetzungen gemäss Anspruch 1 oder Verfahren gemäss Anspruch 2, worin Komponente b) eine Verbindung der Formel VIII oder der Formel IX oder ein Gemisch solcher Verbindungen ist, $R^{14}$ $C_5$-$C_7$Cycloalkyl oder $C_6$-$C_{18}$Aryl ist und $R^{15}$ $C_6$-$C_{18}$Arylen ist.

9. Härtbare Zusammensetzungen oder Verfahren gemäss Anspruch 8, worin $R^{14}$ Cyclohexyl oder Phenyl ist und $R^{15}$ ein Rest der Formel XIII ist

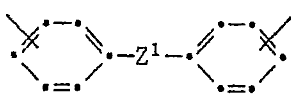 (XIII)

worin $Z^1$ eine direkte C-C-Bindung, $-CH_2-$, $-C(CH_3)_2-$, $-C(CF_3)_2-$, -O-, -S-, $-SO_2-$ oder -CO- ist.

10. Verwendung der härtbaren Zusammensetzungen gemäss Anspruch 1 als Matrixharze für die Herstellung von Faserverbundwerkstoffen.